# EUROPEAN PATENT SPECIFICATION

(11) **EP 1 491 735 B1**
(45) Date of publication and mention of the grant of the patent: **27.06.2007**
(21) Application number: 03745438.6
(22) Date of filing: 28.03.2003
(51) Int. Cl.: F01N 3/20

(54) **EXHAUST GAS DECONTAMINATION SYSTEM AND METHOD OF CONTROLLING THE SAME**
ABGASENTGIFTUNGSSYSTEM UND VERFAHREN ZU DESSEN STEUERUNG
SYSTEME DE DECONTAMINATION DE GAZ D'ECHAPPEMENT ET PROCEDE DE COMMANDE ASSOCIE

(30) Priority: 29.03.2002 JP 2002093872
(43) Date of publication of application: 29.12.2004
(73) Proprietor: Isuzu Motors Limited, Shinagawa-ku, Tokyo 140-0013 (JP)
(72) Inventor: UEKUSA, T., Isuzu Advanced Engineering Center LTD., Fujisawa-shi, Kanagawa 252-8501 (JP); NAKATA, T., Isuzu Advanced Engineering Center LTD., Fujisawa-shi, Kanagawa 252-8501 (JP); ENOKI, K., Isuzu Advanced Engineering Center LTD., Fujisawa-shi, Kanagawa 252-8501 (JP); UEMATSU, Y., Isuzu Advanced Engineering Cntr. LTD., Fujisawa-shi, Kanagawa 252-8501 (JP); FUJITA, T., Isuzu Advanced Engineering Center LTD., Fujisawa-shi, Kanagawa 252-8501 (JP); TANAKA, Y., Isuzu Advanced Engineering Center LTD., Fujisawa-shi, Kanagawa 252-8501 (JP); YOKOYAMA, J., Isuzu Advanced Engineering Ctr. LTD., Fujisawa-shi, Kanagawa 252-8501 (JP); SHIBUYA, H., Isuzu Advanced Engineering Cntr. LTD., Fujisawa-shi, Kanagawa 252-8501 (JP)
(74) Representative: Weber, Roland
(86) International application number: PCT/JP2003/003936
(87) International publication number: WO 2003/083272

(56) References cited:
- WO-A1-00/42302
- WO-A1-02/22255
- DE-A1- 3 013 445
- DE-C1- 4 410 489
- JP-A- 2001 241 321

## Description

### BACKGROUND OF THE INVENTION

### Field of the Invention

This invention relates to an exhaust gas purifying system for reducing and purging NOx in exhaust gas of an internal combustion engine, and also for collecting particulate material in exhaust gas and removing them by burning, and relates to a control method for such a system. More concretely, the invention relates to an exhaust gas purifying system and a control method for the system in which a direct reduction type NOx catalyst is arranged upstream for purging NOx, and a DPF with an oxidation catalyst is arranged downstream for purging PM.

### Detailed Description of the Related Art

Various studies and proposals have been offered regarding an exhaust gas purifying system for purging particulate material (hereafter called PM) and NOx (nitrogen oxides) from exhaust gas of an automobile internal combustion engine such as diesel engines. Concerning PM, a filter called DPF (Diesel Particulate Filter: hereafter called DPF) has been developed, and further, concerning NOx, a NOx reduction catalyst and a three-way catalyst or the like have been developed.

This DPF includes a DPF with an oxidation catalyst whose filter's surface is coated with the oxidation catalyst such as platinum (Pt) for collecting PM, or a DPF with PM oxidation catalyst whose filter's surface is coated with a PM oxidation catalyst such as platinum and a PM oxidation catalyst such as cerium oxide (CeO₂).

The DPF with the oxidation catalyst utilizes the fact that energy barrier of PM oxidization by NO₂ is lower than that of PM oxidization by O₂ and the fact that the PM oxidization by NO₂ can be performed at a lower temperature. Through the oxidation catalyst, NO in the exhaust gas is oxidized to NO₂. The collected PM is oxidized by the generated NO₂ and purged.

Moreover, the DPF with the PM oxidation catalyst has the catalyst such as cerium oxide. In the low temperature oxidation range (approximately 350°C to 450°C), NO is oxidized to NO₂ through the oxidation catalyst and PM is oxidized by this NO₂. In the middle temperature oxidation range (approximately 400°C to 600°C), O₂ in the exhaust gas is activated through the PM oxidation catalyst and PM is directly oxidized by the activated O₂. And in the high temperature oxidation range (approximately 600°C or higher) which is not lower than a temperature at which PM burns with O₂ in the exhaust gas, PM is oxidized by O₂ in the exhaust gas.

Moreover, there are some DPFs having an oxidation catalyst such as platinum or the like at upstream of the filter instead of coating the filter with the oxidation catalyst. In these DPFs, NO in the exhaust gas is oxidized through the upstream oxidation catalyst, and the PM collected in the downstream is oxidized to CO₂ by generated NO₂.

In the DPF with a oxidation catalyst and DPF having an upstream oxidation catalyst, PM is collected and oxidized utilizing PM oxidization through the catalyst and PM oxidization by NO₂, and thereby lowering the temperature so that PM can be oxidized.

However, even with these DPF with a oxidation catalyst and DPF having upstream oxidation catalyst, it is necessary to increase the exhaust gas temperature about up to 350°C. And the exhaust gas temperature is too low to activate the catalysts in the conditions of idling and low load in engine operation, therefore, the above-mentioned reaction does not occur but PM is accumulated in DPF without being oxidized. For this reason, the operation of DPF regeneration is performed. The operation is carried by raising exhaust gas temperature to raise the temperature of PM up to the temperature that is not lower than the PM burning temperature. The raising exhaust gas temperature is carried by means of retarded injection timing, multiple stage injection, etc., or burning the fuel supplied to the oxidation catalyst by means of post-injection or injection in an exhaust pipe. In the operation of DPF regeneration, it is necessary to be the oxygen concentration of exhaust gas relatively high and to raise the temperature of the collected PM to the PM burning temperature in an oxidation atmosphere.

On the other hand, as one of catalysts for purging NOx, there is a NOx occlusion reduction type catalyst used for an exhaust gas purifying system for an internal combustion engine proposed by the Japanese Laid-Open Patent Publication No.2000-274279 and others. This NOx occlusion reduction type catalyst is formed with a noble metal catalyst such as platinum and an alkaline earth such as barium (Ba) etc. on a catalyst carrier. NO in exhaust gas is oxidized to become NO₂ by the catalytic action of the noble metal catalyst in a high oxygen concentration atmosphere, and it is diffused into the catalyst in a form of nitric ion NO₃ and occluded in a form of nitrate.

Then, when an air/fuel ratio becomes rich and the oxygen concentration decreases, the nitric ion (NO₃⁻) is changed to the form of NO₂ and discharged, and NO₂ is reduced to N₂ by the reducing agents such as unburned hydrocarbon (HC), CO, and H₂ contained in the exhaust gas through the catalytic action. This catalytic action is able to prevent NOx from being discharged into the atmospheric air.

For this purpose, the exhaust gas purifying system according to the Japanese Laid-Open Patent Publication NO.2000-274279 makes the NOx occlusion reduction type catalyst occlude NOx when an air/fuel ratio of the influx exhaust gas is lean, and when the NOx occlusion ability is almost saturated, the system performs regeneration operation of the catalyst to make the air/fuel ratio of the exhaust gas to be the theoretical air/fuel ratio or rich, and thereby makes the catalyst discharge the NOx occluded by decreasing the oxygen concentration of the influx exhaust gas. The catalyst reduces this discharged NOx, and thus purifies NOx.

However, although the discharged NOx needs to be reduced by the noble metal catalyst in this regeneration operation, a large quantity of NOx is discharged within a short time, therefore, it is difficult to reduce the whole quantity of NOx to N₂ by letting it contact with the reducing agents and the noble metal catalyst even if a proper quantity of reducing agents is supplied, and a part of NOx leaks, therefore, there is the problem that the reduction of NOx has to be limited.

Further, there is another problem of sulfur poisoning that it is difficult to maintain a high purifying rate of NOx for long hours because the catalytic function deteriorates due to sulfur contained in a fuel for a diesel engine.

In order to purge sulfur for recovering from the state of deterioration caused by the sulfur poisoning, it is necessary to raise the catalyst temperature up to 650°C or higher, and to raise the catalyst temperature to 650°C or higher in a diesel engine, it is necessary to raise the exhaust gas temperature to 600°C or higher. However, even if the exhaust gas temperature increasing control such as intake throttle and rich burning is performed, it is actually difficult to raise the catalyst temperature up to 650°C only by engine control.

On the other hand, separately from the NOx occlusion reduction type catalyst, there is a catalyst for directly reducing NOx (hereafter called a direct reduction type NOx catalyst) described in the Patent Application NO. 19992481 applied to the Republic of Finland and NO.20000617 applied to the Republic of Finland.

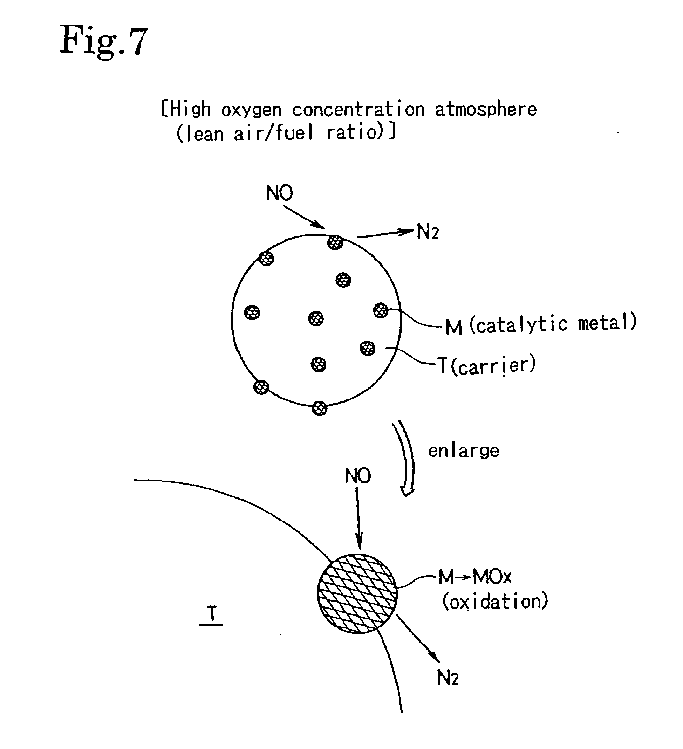

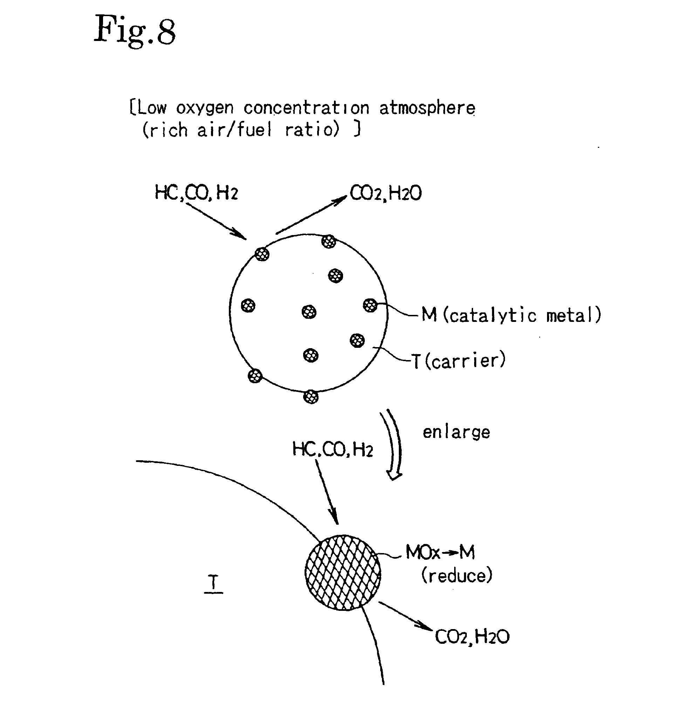

This direct reduction type NOx catalyst, as shown in Fig.7 and Fig.8, is the one supporting a metal M such as rhodium (Rh) and palladium (Pd) as catalyst components on a carrier T such as â-type zeolite, and in a high oxygen concentration atmosphere as in the exhaust gas of which the air/fuel ratio of an internal combustion engine such as a diesel engine is in a lean state, the catalyst contacts NOx and reduces it to N₂, and also this catalyst component itself is oxidized to a metal oxide MOx such as rhodium oxide. Since this metal M loses the ability for NOx reduction when it has completely been oxidized, it is necessary to regenerate the metal.

As shown in Fig.8, this regeneration is performed by reducing the metal oxide MOx such as the rhodium oxide back to the metal by making the metal oxide contact with the reducing agents such as unburned HC, CO, and hydrogen H₂ in the reduction atmosphere by lowering the oxygen concentration in the exhaust gas to almost zero percent as the air/fuel ratio is the theoretical air/fuel ratio or rich state.

Moreover, this direct reduction type NOx catalyst has the advantages that the reaction of reducing the metal oxide MOx is speedily performed even at lower temperature (for example, at 200°C or higher) compared with other catalysts, and that the problem regarding the sulfur poisoning is not so serious.

Further, the direct reduction type NOx catalyst is so arranged that the oxidation-reduction reaction, especially, the reducing reaction of NOx in a rich state, is promoted by mixing with cerium (Ce) which decreases the oxidation action of the metal M and contributes to hold NOx reduction ability as well as by providing a three-way catalyst in the lower layer. Moreover, iron (Fe) is added to the catalyst carrier to improve a purifying rate of NOx.

However, although this type of catalyst is less sulfur-poisoned than a NOx occlusion reduction type catalyst, it deteriorates by being gradually poisoned with sulfur in the fuel. Namely, since the sulfur in the exhaust gas is absorbed in the iron added to the catalyst carrier in a state of SO₂, primary sulfur poisoning which inhibits the improvement of purifying performance of NOx occurs due to this iron. Further, such a secondary sulfur poisoning occurs as SO₂ discharged from the iron changes into SO₃ in an oxidation atmosphere containing no reducing agent in a constant temperature, and as SO₃ is combined with cerium, therefore, this cerium is decreased in contribution to holding the reduction ability of NOx, and thus the purifying rate of NOx is decreased.

However, in the direct reduction type NOx catalyst, a catalyst temperature (sulfur purging temperature) necessary for recovering the catalytic against catalyst deterioration of this sulfur poisoning is about 400°C. And this temperature is relatively low compared with that for recovering the NOx collusion reduction type catalyst which is about 650 °C, therefore, this temperature can easily be realized under normal driving conditions.

When the deterioration of the direct reduction type NOx catalyst by this sulfur poisoning develops, the purifying rate of NOx is decreased due to deterioration in the reduction ability of NOx into N₂ even in a high oxygen concentration atmosphere and in a rich state of an exhaust gas air/fuel ratio. Moreover, since the NOx reduction ability soon reaches its lower limit, the regeneration operation by rich burning is frequently required, and the fuel consumption rate becomes worsen.

Hence, in the direct reduction type NOx catalyst, the recovering operation for sulfur deterioration by purging sulfur is necessary in addition to the regeneration operation for reducing the oxidation metal MOx back to the metal M by contacting it with reducing agents in the reduction atmosphere. The recovering operation is performed as follows; the progress of the deterioration caused by the sulfur poisoning is monitored, and when the deterioration reaches to some level, the sulfur is removed by raising the temperature of the catalyst to about 400°C, the temperature not less than the one for purging sulfur. This recovering operation is carried out under a low oxygen concentration condition in order to avoid the secondary sulfur poisoning.

However, this sulfur purging has the problem that in case of rich spike driving for bringing the exhaust gas into a low oxygen concentration, a large quantity of HC, CO which are unburned components is produced in the exhaust gas and discharged outside, and this is undesirable from the viewpoint of exhaust gas purification.

### SUMMARY OF THE INVENTION

The present invention is made for solving the above-mentioned problems, and the purposes of the invention are to provide an exhaust gas purifying system capable of burning and removing PM collected on the downstream side DPF by utilizing HC and CO generated when performing the operation for recovering the upstream side direct reduction type NOx catalyst from a catalyst deterioration due to poisoning with sulfur, and to provide a control method for the system.

A NOx purging system for achieving the above purposes is constituted by providing an exhaust gas purifying system having a direct reduction type NOx catalyst for purging NOx in an exhaust gas, and a DPF with a catalyst for purging PM in the exhaust gas arranged in an exhaust gas passage in that order in the direction of from an upstream side to a downstream side, which further comprises an air supply system for supplying air between the direct reduction type NOx catalyst and the DPF with a catalyst during a operation for recovering the direct reduction type NOx catalyst from a catalyst deterioration due to poisoning with sulfur by bringing the oxygen concentration in the exhaust gas to be substantially zero and raising the exhaust gas temperature.

This direct reduction type NOx catalyst means a catalyst of which the catalyst components reduce NOx (nitrogen oxides) to N₂ (nitrogen) and also these catalyst components are oxidized when the oxygen concentration in the exhaust gas is high, and these catalyst components are reduced when the oxygen concentration in the exhaust gas decreases. The direct reduction type NOx catalyst can be composed of some special metals such as rhodium (Rh) and palladium (Pd) carried on a catalyst carrier such as â-type zeolite.

Further, this catalyst can be composed of cerium (Ce) for decreasing oxidation action of the catalyst component metals and letting them contribute to holding of the NOx reducing ability. And it can be provide with a three-way catalyst having platinum or the like in the lower layer for accelerating the oxidation-reduction reaction, especially, the reduction reaction for the NOx discharged under a rich condition. Moreover, iron can be added to the catalyst carrier for improving a purging rate of NOx.

This operation for recovering the direct reduction type NOx catalyst from catalyst deterioration is a operation for bringing an oxygen concentration in exhaust gas to substantially zero for avoiding the secondary sulfur poisoning on the direct reduction type NOx catalyst, and for raising the exhaust gas temperature and thereby increasing the catalyst temperature to sulfur purge temperature (about 400 °C) or higher at which sulfur is exhausted. This operation can be performed by the rich spike control such as air-intake control by an intake throttle, fuel-injection control by retarded injection, and EGR control.

Moreover, in the above-mentioned NOx purging system, the air supply system is arranged so as to supply a part of the air supercharged by the compressor of a turbo-charger to a position between the direct reduction type NOx catalyst and the DPF with a catalyst. With this arrangement, the air can be supplied by a relatively simple system.

Furthermore, as the DPF with a catalyst in the above-mentioned NOx purging system, various kinds of DPFs having an oxidation catalyst can be utilized. Namely, a DPF with a catalyst formed with an oxidation catalyst carried on wall-flow type wall surfaces, and a DPF with a catalyst formed with an oxidation catalyst and a PM oxidation catalyst carried on the wall-flow type wall surfaces can be utilized. Moreover, instead of the DPF with a catalyst, a DPF with the front-arranged oxidation catalyst can also be used.

A method for controlling NOx purging system for achieving the above-mentioned purposes, in an exhaust gas purging system having a direct reduction type NOx catalyst for purging NOx in an exhaust gas and a DPF with a catalyst for purging PM in the exhaust gas arranged in an exhaust gas passage in that order in the direction of from an upstream side to a downstream side, is characterized by supplying air between the direct reduction type NOx catalyst and the DPF with a catalyst during an operation for recovering the direct reduction type NOx catalyst from a catalyst deterioration due to poisoning with sulfur by bringing the oxygen concentration in the exhaust gas to be substantially zero and raising the exhaust gas temperature.

According to these constitution, in the case of using the direct reduction NOx catalyst, when purging sulfur for recovering the direct reduction type NOx catalyst from a catalyst deterioration, a large quantity of unburned components HC, CO are discharged because the exhaust gas is brought into a low oxygen state by rich spike operation to avoid the secondary sulfur poisoning. At the same time, the exhaust gas temperature is increased by the rich spike operation and the exhaust gas temperature is normally raised to 400°C or higher at the down stream side of the direct reduction type NOx catalyst.

At this time, air is supplied to the downstream side of the direct reduction type NOx catalyst, then HC and CO generated by rich spike operation are oxidized by the oxidation catalyst of the DPF with a catalyst at the downstream side. Because of the oxidation of HC and CO, the temperature of the PM collected in the DPF is raised and is burned with O₂ contained in the supplied air to be eliminated. The DPF is thus regenerated.

The exhaust gas purifying system and the control method of the system according to the present invention are provided with the air supply system, by combining the direct reduction type NOx catalyst on the upstream side and the DPF with a catalyst on the downstream side (or the DPF with a front-arranged oxidation catalyst). In the above-mentioned system and method, by supplying air between the direct reduction type NOx catalyst and the DPF with a catalyst (or the DPF with a front-arranged oxidation catalyst) at the time of the sulfur purge, the unburned HC and CO generated by the sulfur purge for the direct reduction type NOx catalyst are prevented from exhausting outside; in addition, the PM collected in the DPF with a catalyst can be burned and eliminated at the same time.

Namely, the direct reduction type NOx catalyst is selected as the catalyst for purging NOx and the DPF with a catalyst and the DPF with a front-arranged oxidation catalyst as the DPF for purging PM and these are arranged in the exhaust gas passage from the upstream side in order. Since the air supply system is further provided for supplying air between these when the operation recovering from a catalyst deterioration by the sulfur purge is performed, the unburned HC and CO generated by the rich spike operation for the sulfur purging can be oxidized by the supplied air and purged.

At the same time, the heat generated by oxidation of the unburned HC and CO can raise the temperature of the PM collected and accumulated by the DPF with a catalyst or the DPF with a front-arranged oxidation catalyst to the temperature of the re-burning of the PM or higher. The temperature-raised PM can be also burned with the supplied air and eliminated.

Therefore, since the regeneration operation of the DPF for purging PM can also be performed at the time of performing the operation recovering from a catalyst deterioration for the direct reduction type NOx catalyst for purging NOx, the regeneration control of the DPF can be decreased in frequency, and an increase in fuel consumption due to the DPF regeneration operation can be inhibited.

### BRIEF DESCRIPTION OF THE DRAWINGS

Fig.1 is an illustration showing a configuration of an engine provided with an exhaust gas purifying system in an embodiment of the present invention.
Fig.2 is an illustration showing a configuration of a means for controlling the exhaust gas purifying system in an embodiment of the present invention.
Fig.3 is a flowchart showing an example of the exhaust gas purifying system control flow in an embodiment of the present invention.
Fig.4 is a flowchart showing an example of the catalyst regeneration control flow shown at Fig.3.
Fig.5 is a flowchart showing an example of the control flow for the operation recovering from a catalyst deterioration shown at Fig.3.
Fig.6 is a flowchart showing an example of the control flow for a DPF regeneration.
Fig.7 is a diagrammatic view showing the reaction in the high oxygen concentration state of the direct reduction type NOx catalyst.
Fig.8 is a diagrammatic view showing the reaction in the low oxygen concentration state of the direct reduction type NOx catalyst.

### DETAILED DESCRIPTION OF THE PREFERRED EMBODIMENT

In the following, embodiments of the exhaust gas purifying system and its control method relating to the present invention will be explained referring to the drawings.

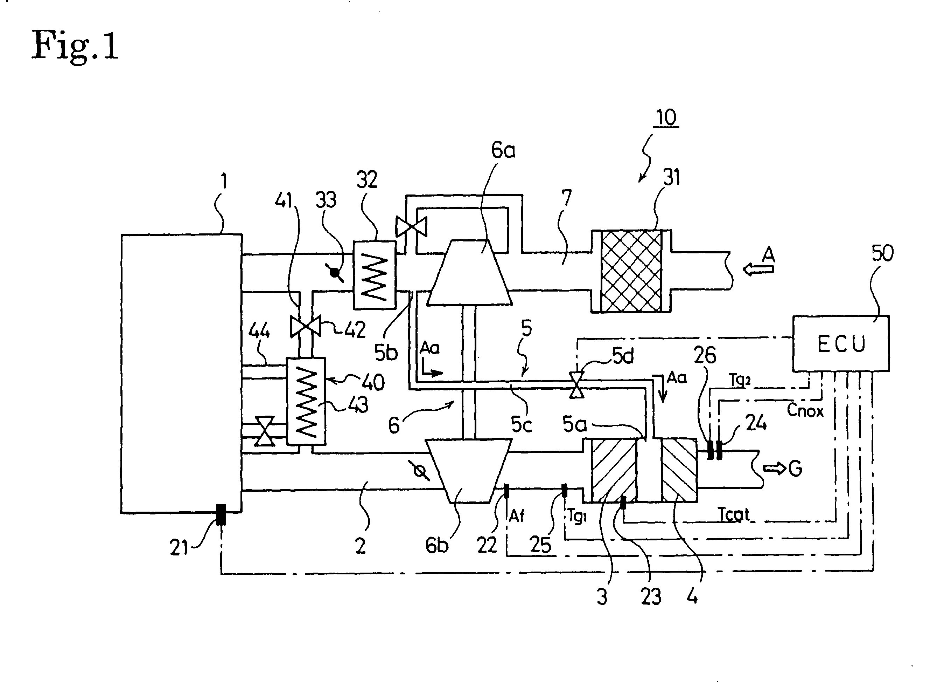

Firstly, the exhaust gas purifying system will be explained. As shown in Fig.1, an exhaust gas purifying system 10 comprises a direct reduction type NOx catalyst 3 and a DPF 4 with a catalyst arranged in an exhaust gas passage 2 of an engine main body 1 in that order in the direction of from an upstream side to a downstream side, and further comprises an air supply system 5 having an air supply port 5a between the direct reduction type NOx catalyst 3 and the DPF 4 with a catalyst.

As shown in Fig.7 and Fig.8, the direct reduction type NOx catalyst 3 is formed by providing with a special metal M such as rhodium (Rh) and palladium (Pd) on a catalyst carrier such as â-type zeolite. Further, cerium (Ce) is mixed, which contributes to relaxing oxidation action of the metal M and holding NOx reduction ability. Moreover, a three-way catalyst having platinum or the like is arranged in the lower layer so as to accelerate oxidation-reduction reaction, especially reduction reaction of NOx under a rich condition, and further, iron (Fe) is added to the catalyst carrier to improve a purifying rate of NOx.

As shown in Fig.7, in a high oxygen concentration atmosphere as in the exhaust gas having a lean air/fuel ratio of an internal combustion engine such as a diesel engine, the direct reduction type NOx catalyst 3 has a property that it comes into contact with NOx to reduce NOx to N₂ and also this metal M itself is oxidized to MOx such as rhodium oxide (RhOx). In addition, in the case of a reduction atmosphere having a low oxygen concentration such as about zero % oxygen concentration in the exhaust gas as same as the air/fuel ratio is the theoretical air/fuel ratio or in a rich condition as shown in Fig.8, the oxidized metal MOx comes into contact with the reducing agents such as unburned HC, CO, and H₂, so as to be reduced back to the original metal M such as rhodium.

The DPF 4 with a catalyst is constructed of a honeycomb filter called a wall-flow type which is formed by sealing in the inlet and outlet sides of the lots of gas passages (cells) in a staggered form. The gas passages are partitioned in parallel by porous walls of porous cordierite or silicon carbide. Or the DPF 4 with a catalyst is constituted of a fabric type filter laminating ceramic fibers around a stainless tube with many holes.

In the case of a DPF with an oxidation catalyst, the filter is constituted by applying an oxidation catalyst such as platinum (Pt) to the wall surfaces of the filter. In the case of a DPF with a PM oxidation catalyst, the filter is constituted by applying an oxidation catalyst such as platinum and a PM oxidation catalyst such as cerium oxide (CeO₂) to the wall surfaces of the filter.

With these DPF 4 with the catalyst, unburned HC and CO can be burned in an oxidation atmosphere at 190°C-200°C.

Moreover, the air supply system 5 is comprised of the air supply port 5a arranged just in front of the DPF 4 with the catalyst, an air supply piping 5c for connecting an air inlet 5b at the downstream side of a compressor 6a of a turbo 6 to the air supply port 5a, and an air supply valve 5d arranged in the air supply piping 5c.

A drive situation detection device 21 comprising a torque sensor and a speed sensor for detecting the driving conditions of the engine, mainly torque Q and engine speed Ne, is arranged. Moreover, an air/fuel ratio sensor 22 for detecting an air/fuel ratio Af is arranged at the upstream side of the direct reduction type NOx catalyst 3 in the exhaust gas passage 2; a catalyst temperature sensor 23 for detecting catalyst temperature Tcat is arranged in the direct reduction type NOx catalyst 3; and further, a NOx sensor 24 for detecting a NOx concentration is arranged at the downstream side. Temperature sensors 25, 26 for detecting the exhaust gas temperatures are arranged at the upstream side of the direct reduction type NOx catalyst 3 and at the downstream side of the DPF 4, respectively.

The exhaust gas purifying system is further comprised of a controller 50 called an engine control unit (ECU) for performing general control for the engine such as fuel injection control by receiving torque (load) Q, engine speed Ne, or the like obtained from the drive situation detection device 21 or the like as input. The controller 50 is provided with a means 200 for controlling the exhaust gas purifying system for performing the catalyst regeneration control, the catalyst deterioration recovering control, the DPF regeneration control, etc. of the direct reduction type NOx catalyst 3.

Moreover, in an air intake passage 7, an air cleaner 31, a compressor 6a of the turbo-charger 6, an inter-cooler 32, and an intake throttle valve 33 are arranged. Further, as an EGR device 40, an EGR passage 41 comprising an EGR valve 42 and an EGR cooler 43, and cooling-water piping 44 are arranged.

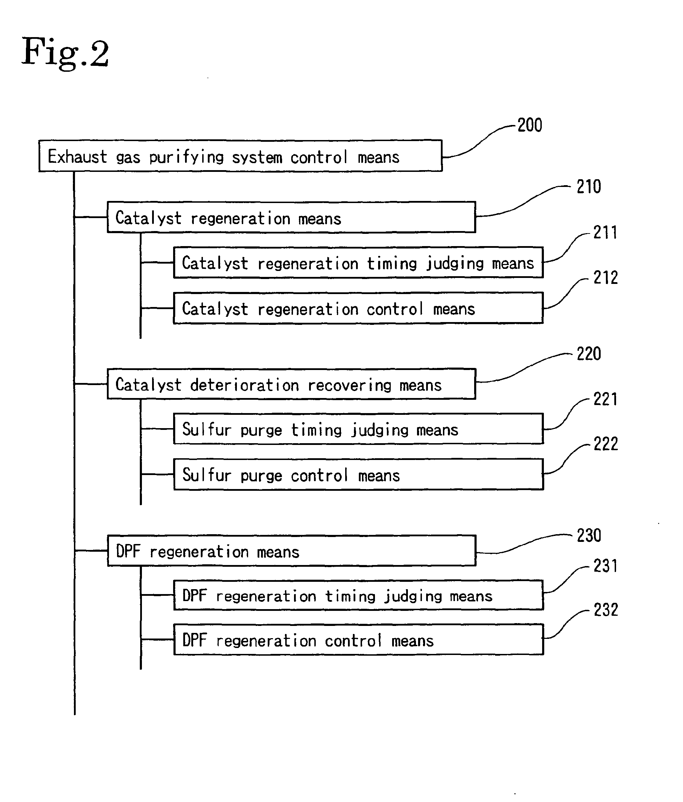

As shown in Fig.2, the exhaust gas purifying system control means 200 is constituted of a catalyst regeneration means 210 comprising a catalyst regeneration timing judging means 211 and a catalyst regeneration control means 212, a catalyst deterioration recovering means 220 comprising a sulfur purge timing judging means 221 and a sulfur purge control means 222, and a DPF regeneration means comprising a DPF regeneration timing judging means 231 and a DPF regeneration control means 232.

The catalyst regeneration means 210 is a means for regeneration the direct reduction type NOx catalyst 3, which has been contacted with NOx under a normal driving state with high oxygen concentration in a lean state of an air/fuel ratio of the exhaust gas and has reduced NOx to N₂ and has been oxidized to a metal oxide MOx. The catalyst regeneration timing judging means 211 judges the timing for performing this catalyst regeneration. And when it judges the timing for the catalyst regeneration, the catalyst regeneration control means 212 generates exhaust gas with a zero percentage oxygen concentration of an air/fuel ratio in the theoretical air/fuel ratio or a rich state, to bring the oxidation metal MOx into contact with the reducing agents such as unburned HC, CO, H₂ in an oxidation atmosphere and returns the oxidation metal MOx to the original metal M.

Here, the normal driving state means engine operation with a torque and speed required to the engine at the time of not performing the operations such as regeneration operation of the direct reduction type NOx catalyst 3, the catalyst deterioration recovering operation, the regeneration operation of the DPF 4 with the catalyst. In the normal operation, NOx in the exhaust gas is directly reduced to N₂ through the direct reduction type NOx catalyst 3 and purged, and PM in the exhaust gas is purged by means of the collection, burning and elimination at the DPF 4 with the catalyst.

This catalyst regeneration timing judging means 211 judges whether it is a time to regenerate the catalyst or not, based on the NOx concentration Cnox in the exhaust gas at the downstream side of the direct reduction type NOx catalyst 3 when reducing NOx, an elapsed time of a high oxygen concentration state, or an estimated calculation quantity of NOx to be reduced by the direct reduction type NOx catalyst when reducing NOx.

Moreover, the catalyst regeneration control means 212 is a means for lowering the oxygen concentration in the exhaust gas, namely, a means for performing rich spike operation of an air/fuel ratio Af of 14.7 or less. The rich spike operation is performed by any one of or a combination of following controls; fuel injection control for controlling the injection of fuel to be supplied to the combustion chamber of the internal combustion engine, intake quantity control for controlling the quantity of the intake air, or the EGR control for controlling the quantity of the EGR gas in the EGR device. Accordingly, the detected value Af, obtained from the above control, of the air/fuel ration sensor 22 is feedback-controlled so that the value Af is within a predetermined set range.

Moreover, the fuel injection control includes a main injection timing control for varying main injection timing of the fuel to be injected into the combustion chamber of the engine, a post-injection control for performing post-injection after the main injection, or the like. The air intake quantity control includes an intake throttle valve control for controlling the opening of the intake throttle valve 33, turbo-charger intake quantity control for controlling an intake quantity control for controlling an intake quantity from the compressor 6a of the turbo-charger 6, or the like.

The catalyst deterioration recovering means 220 is comprised of the sulfur purge timing judging means 221, and the sulfur purge control means 222.

The sulfur purge timing judging means 221 is a means for judging whether to perform sulfur purge control or not. The means 221 estimates a sulfur quantity X1 to be accumulated on the direct reduction type NOx catalyst 3 from fuel consumption and a sulfur concentration in the fuel, judges to start the sulfur purge control when the cumulative sulfur quantity Xt which is obtained by integrating the estimated sulfur quantity X1, is larger than a judgment value X1 to start the sulfur purge. The means 221 judges not to start the sulfur purge control when the value Xt is smaller than the value X1.

The sulfur purge control means 222 is a means for performing the rich spike operation for lowering an oxygen concentration in the exhaust gas and also raising catalyst temperature Tcat to the temperature of the sulfur purge or above by judging it as necessary to purge sulfur when the cumulative sulfur quantity Xt reaches the limit X1, and thereby raises the catalyst temperature Tcat to sulfur purge temperature Tr or above and performs the operation for recovering the direct reduction type NOx catalyst from a catalyst deterioration due to poisoning with sulfur by purging sulfur while preventing the secondary sulfur poisoning in the rich state. Moreover, the rich spike operation in this sulfur purge operation can be performed by any one of the fuel injection control, air intake quantity control, and EGR control or a combination of them as the rich spike operation in the regeneration operation.

According to the present invention, the sulfur purge control 222 includes the DPF regeneration control. In the DPF regeneration control, a part Aa of the supercharged air at the downstream of the compressor 6a of the turbo-charger 6 is supplied to the upstream side of the DPF 4 with the catalyst by controlling the air supply valve 5d to open. With this air supply, a large quantity of unburned HC and CO generated by the rich spike operation in the sulfur purge control are oxidized by the oxidation catalyst of the DPF 4 with the catalyst, and further, the PM collected by the DPF 4 with the catalyst is raised in temperature by the heat generated by the oxidation of these HC and CO, and is removed by burning with O₂ supplied by the air supply.

Namely, when purging sulfur, the exhaust gas temperature is raised by the rich spike operation, and the catalyst temperature Tcat of the direct reduction type NOx catalyst 3 is raised to the sulfur purge temperature or above (about 400°C). By supplying air at the time, the unburned HC and CO generated by the rich spike operation is burned by the catalytic action of the oxidation catalyst of the DPF 4 with the catalyst. The temperature of the exhaust gas flowing to the PM collected by the DPF 4 with the catalyst can be raised further to, in general, about 500°C. Accordingly, the DPF 4 with the catalyst can be regenerated by means of removing the PM by burning.

Moreover, the DPF regeneration means 230 is a means for removing PM by burning the PM collected by the DPF 4 with the catalyst by the regeneration control with the DPF regeneration control means 232 when the DPF regeneration timing judging means 231 judges that the DPF is getting clogged and the regeneration operation of DPF 4 with a catalyst is necessary.

The DPF regeneration timing judging means 231 is a means for judging regeneration timing of the DPF. The means 231 calculates the cumulative quantity of the PM by estimating the quantity of the PM to be accumulated on the DPF 4 with the catalyst based on the operating conditions of the engine and by integrating it. The means 231 judges the time for regeneration of the DPF when the cumulative quantity of the PM exceeds a preset judgment value, or when a difference between the pressures before and after the DPF 4 with the catalyst or a ratio of them exceeds the judgment value.

Moreover, the DPF regeneration control means 232 performs the regeneration operation for the DPF 4 with the catalyst by utilizing an electronic control fuel injection system such as a common-rail injection system, and raising exhaust gas temperature by means of retarded injection timing, multistep injection or the like, and supplying a fuel to the oxidation catalyst applied to the filter by the post-injection and injection in the exhaust pipe and burning it at that filter, to raise the exhaust temperature to the re-burning temperature or above.

This regeneration operation is performed in a lean burning state, or in the state wherein the oxygen concentration of the exhaust gas flowing into the DPF 4 with the catalyst is high by supplying air from the air supply system 5.

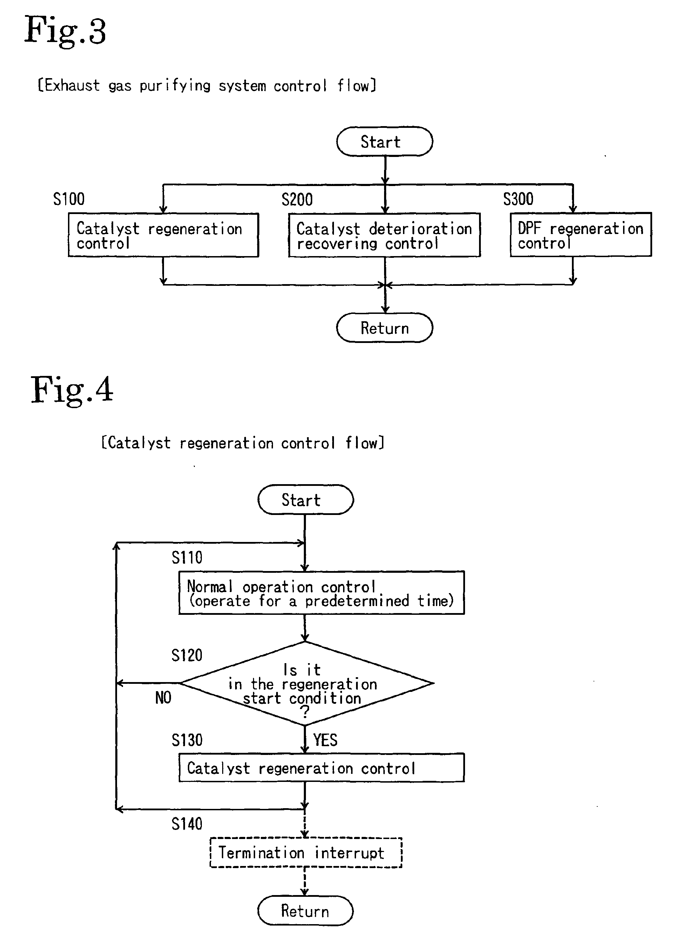

Next, the exhaust gas purifying system control flow for removing NOx in the exhaust gas by controlling the above-mentioned exhaust gas purifying system 10 by the exhaust gas purifying system control means 200 will be explained below. This control flow will be explained based on the flowcharts shown in Fig.3 to Fig.5 as examples.

The exhaust gas purifying system control flow shown in Fig.3 consists of a catalyst regeneration control at step S100, a catalyst deterioration recovering control at step S200, and a DPF regeneration control at step S300. The flow is composed as a part of the entire flow for controlling the whole engine. It is shown in Fig.3 as the flow to be performed synchronically with the engine control flow based upon the call by the main engine control flow, to be interrupted with the end of the engine operation and returned to the main engine control flow to be ended together with the control flow.

As shown in Fig.3, when the exhaust gas purifying system control flow starts, the catalyst regeneration control at step S100, the catalyst deterioration recovering control at step S200, and the DPF regeneration control at step S300 are performed in parallel, and in case the flow has to be ended due to the end of the engine operation or the like, an interrupt occurs to end the control at each step and the control flow returns to the flow, and further returns to a main engine control flow that is not shown, to terminate this shown flow.

As shown in the catalyst regeneration control flow in Fig.4, after the catalyst regeneration control performs normal operation control for purging NOx by the direct reduction type NOx catalyst 3 for a predetermined time (for example, a time equivalent to a time interval for judging whether or not to perform the catalyst regeneration control) at step S110, it is judged whether the direct reduction type NOx catalyst 3 is in the regeneration start condition or not. If it is in the regeneration start condition, the catalyst regeneration control at step S130 is performed before the flow returns to the step S110, and if it is not in the regeneration start condition, the flow directly returns to the step S110, and the flow repeats this control. If this control flow has to be ended due to ending the engine operation or the like, the termination interrupt at step S140 occurs and the control flow returns to the control in Fig.3.

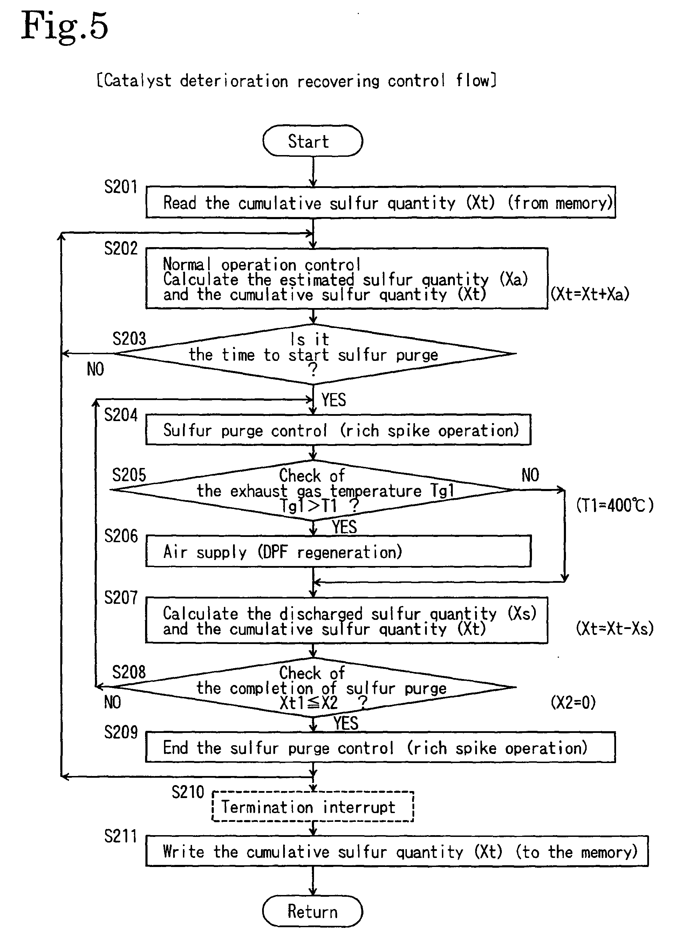

In the catalyst deterioration recovering control at step S200, as shown in the catalyst deterioration recovering control flow in Fig.5, when the flow starts, the cumulative sulfur quantity Xt which accumulated on the direct reduction type NOx catalyst 3 during the last engine operation is read at step S201 from the memory.

At step S202, after performing the normal operation control for a predetermined time (for example, a time equivalent to a time interval for judging whether to perform the catalyst deterioration recovering control or not), a estimated quantity Xa of the sulfur accumulated by the engine operation at the step S202 is calculated from the fuel consumption and the sulfur concentration in the fuel, and the estimated sulfur quantity Xa is added to the cumulative sulfur quantity Xt to make a new cumulative sulfur quantity (Xt = Xt + Xa).

At the next step S203, whether it is time to start purging sulfur or not is judged by whether the cumulative sulfur quantity Xt is larger than a predetermined purge start judgment value X1 or not. When the cumulative sulfur quantity is not larger, it is judged that it is not yet time to start purging sulfur, and the control flow returns to the step S202.

When the cumulative sulfur quantity Xt is judged as larger than the predetermined purge start judgment value X1 by the judgment at the step S203, the following control at step S204-S207. The sulfur purge control at step S204 is performed for a predetermined time. At step S205, if the exhaust gas temperature Tg1 is higher than the predetermined judgment temperature T1 (for example, 400°C), at the inlet side of the direct reduction type NOx catalyst, the control flow goes to step S207 after performing air supply at step S206, but if the exhaust gas temperature is lower than the predetermined judgment temperature T1, the control flow goes to the step S207 without performing air supply. Moreover, instead of using the exhaust gas temperature Tg1 for the judgment at the step S205, the catalyst temperature Tcat can be used.

The sulfur purge control at the step S204 performs the catalyst deterioration recovering operation not only by raising the catalyst temperature Tcat to the sulfur purge temperature or above by the rich spike operation, but also by decreasing the oxygen concentration in the exhaust gas to be substantially zero for preventing the generation of SO₃ while preventing the secondary sulfur poisoning of cerium.

Moreover, by supplying air at the step S206, the unburned HC and CO that are generated by the rich spike operation in the sulfur purge control, is oxidized and purged by means of the catalytic action of the oxidation catalyst of the DPF 4 with the catalyst. And also the DPF 4 with the catalyst is regenerated by raising the temperature of PM collected by the DPF 4 with the catalyst by the heat generated from the oxidation. Then the PM is oxidized by O₂ in the supplied air Aa.

At the next step S207, the flow control calculates a discharged sulfur quantity Xs which is discharged by the sulfur purge, based on the exhaust gas quantity and the catalyst temperature Teat (or exhaust temperature Tg1) as well as pre-inputted sulfur discharge map data, subtracting this discharged sulfur quantity Xs from the cumulative sulfur quantity Xt to obtain the new cumulative sulfur quantity Xt after the sulfur purge operation at the step S204. If the cumulative sulfur quantity Xt is higher than the predetermined second judgment value X2 (normally it is zero) by the judgment at the step S208, the control flow returns to the step S204 and continues the sulfur purge control until the cumulative sulfur quantity Xt becomes the second judgment value X2 or below, and if the cumulative sulfur quantity Xt is judged as not higher than the second judgment value X2 at the step S208, the sulfur purge is judged as completed, and the sulfur purge control is stopped and the control returns to the normal operation. Here, if the cumulative sulfur quantity Xt is negative, the quantity Xt is set to be zero.

Moreover, in the flow indicated at Fig.5, the sulfur purge operation is programmed so as to end when the cumulative sulfur quantity Xt is judged as the second judgment value X2 or below at the steps S207 and S208; however, the sulfur purge operation time may be calculated from the cumulative sulfur quantity Xt calculated from the fuel consumption and the sulfur concentration in the fuel, from the exhaust gas quantity and the catalyst temperature Tcat (or the exhaust gas temperature Tg1) at the time of starting the sulfur purge operation, and from the pre-inputted sulfur purge operation map data, to perform the sulfur purge control during this operation time.

Ending this step S209, the control returns to the step S202 and repeats the flow. When the control flow has to be terminated due to the end of the engine operation or the like, a termination interrupt is generated at step S210, and the cumulative sulfur quantity Xt at the time of the termination, namely, the cumulative sulfur quantity Xt calculated at the steps S202 or S207 are written in the memory at step S211, and the control flow then returns to the NOx purging system control flow in Fig.3 and ends.

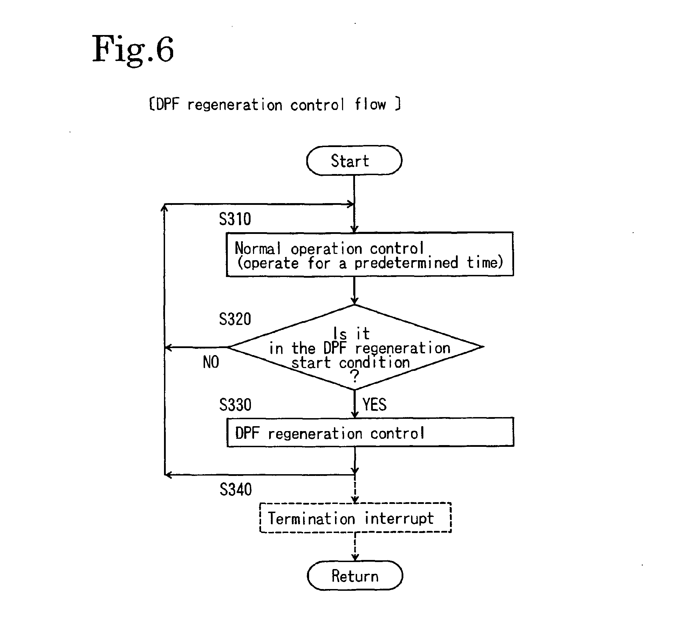

As shown in the DPF regeneration control flow at Fig.6, the DPF regeneration control at the step S300 performs the normal operation control for collecting PM for a predetermined time (for example, a time equivalent to the time interval for judging whether to perform the DPF regeneration control or not) at step S310; and thereafter, it is judged at step S320 whether the DPF 4 with the catalyst is in the DPF regeneration start condition or not, and if it is in the DPF regeneration start condition, the control flow performs the DPF regeneration control at step S330 before returning to the step S310. If it is not in the DPF regeneration start condition, the control flow directly returns to the step S310, to repeat this control. When the control flow has to be terminated due to the end of the engine operation or the like, a termination interrupt is generated at step S340 and returns to the control at Fig.3.

If the catalyst regeneration control at Fig.4, the catalyst deterioration recovering control at Fig.5, and the DPF regeneration control at Fig.6 return to the exhaust gas purifying system control flow at Fig.3 by a termination interrupt, they further return to an main engine control flow that is not shown, and the NOx purging system control flow also ends together with the end of the main engine control flow.

Moreover, although the above-described flow does not illustrate, any of the catalyst regeneration control, the catalyst purge control, the DPF regeneration control overlaps the other, any one of them is performed prior to the other according to the preset priority sequence.

According to these constitutions of the exhaust gas purifying system 10 and the control method therefor, the direct reduction type NOx catalyst 3 for purging NOx and the DPF 4 with the catalyst for purging PM are arranged in the exhaust gas passage in that order of from an upstream side to a downstream side, and the air supply system 5 is arranged for supplying air between them. The air is thus supplied to the DPF 4 with the catalyst at the time of the operation for recovering the direct reduction type NOx catalyst from a catalyst deterioration due to poising with sulfur by the sulfur purge, to purge by oxidizing the unburned HC and CO generated by the rich spike operation for purging sulfur, and also the PM collected and accumulated by the DPF 4 with the catalyst can be removed by means of burning by raising the temperature of the PM to the PM re-burning temperature or above by the heat generated by this oxidation.

Moreover, the DPF with the catalyst is explained as an example of a DPF so far, however, the present invention is also applicable to such a type of DPF as an oxidation catalyst is arranged in front of the DPF instead of the DPF with the catalyst.

In the case of the DPF with the front-arranged oxidation catalyst, this catalyst is constituted by coating the wall surfaces of lots of gas passage (cells) with a noble metal catalyst depositing platinum or the like, on alumina, zeolite, silica or the like. The passages are arranged in a honeycomb structure formed of cordierite, silicon carbide, stainless or the like, and are penetrating from the upstream side through the downstream side.

The air is supplied at the upstream side of the oxidation catalyst. The unburned HC and CO are oxidized by the oxidation catalyst. The exhaust gas temperature is then raised by means of the heat generated by that oxidation. The temperature of the downstream side DPF is raised by means of raising the exhaust gas temperature. Accordingly, the PM collected by the DPF is oxidized by O₂ in the air supplied. And the DPF is thus regenerated.

### INDUSTRIAL APPLICABILITY

The present invention provides an exhaust gas purifying system and a control method therefor, capable of removing PM collected at the downstream side DPF by utilizing HC and CO generated at the time of the operation for recovering the upstream side direct reduction type NOx catalyst from catalyst deterioration due to poisoning with sulfur.

Hence, the present invention is applicable to an exhaust gas purifying system combining a NOx catalyst with a DPF, and is capable of efficiently purifying the exhaust gas from vehicles or the like installing these exhaust gas purifying systems, and preventing air pollution.

## Claims

1. An exhaust gas purifying system having a direct reduction type NOx catalyst (3) for purging NOx in an exhaust gas and a DPF with a catalyst (4) for purging PM in the exhaust gas arranged in an exhaust gas passage in that order in the direction of from an upstream side to a downstream side, which further comprises an air supply system (5) for supplying air between the direct reduction type NOx catalyst (3) and the DPF wit a catalyst (4) during a operation for recovering the direct reduction type NOx catalyst (3) from a catalyst deterioration due to poisoning with sulfur by bringing the oxygen concentration in the exhaust gas to be substantially zero and raising the exhaust gas temperature.

2. The exhaust gas purifying system as claimed in claim 1, wherein the air supply system (5) supplies a part of the air supercharged by a compressor of a turbo-charger to a position between the direct reduction type NOx catalyst (3) and the DPF with a catalyst (4).

3. The exhaust gas purifying system as claimed in claim 1 or 2, wherein the DPF with a catalyst (4) is formed with the oxidation catalyst carried on wall-flow type wall surfaces.

4. The exhaust gas purifying system as claimed in claim 1 or 2, wherein the DPF with a catalyst (4) is formed with the oxidation catalyst and PM oxidation catalyst carried on wall-flow type wall surfaces.

5. The exhaust gas purifying system as claimed in claim 1 or 2, wherein the DPF having an oxidation catalyst disposed at the upstream side is used instead of the DPF with a catalyst (4).

6. A method for controlling an exhaust gas purifying system having a direct reduction type NOx catalyst (3) for purging NOx in an exhaust gas and a DPF with a catalyst (4) for purging PM in the exhaust gas arranged in an exhaust gas passage in that order in the direction of from an upstream side to a downstream side, which comprises supplying air (5) between the direct reduction type NOx catalyst (3) and the DPF with a catalyst (4) during an operation for recovering the direct reduction type NOx catalyst (3) from a catalyst deterioration due to poisoning with sulfur by bringing the oxygen concentration in the exhaust gas to be substantially zero and raising the exhaust gas temperature.

## Patentansprüche

1. Abgasreinigungssystem mit einem NOx-Katalysator vom direkten Reduktionstyp (3) für das Säubern von NOx in einem Abgas und mit einem DPF mit einem Katalysator (4) für das Reinigen von PM in dem Abgas, der in einer Abgasleitung in der Ordnung in Richtung von einer aufstromigen Seite zu einer abstromigen Seite angeordnet ist, das weiterhin aufweist ein Luftzuführungssystem (5) für das Zuführen von Luft zwischen dem NOx-Katalysator vom direkten Reduktionstyp und dem DPF mit einem Katalysator während eines Betriebes für das Regenerieren des NOx-Katalysators vom direkten Reduktionstyp von einer Katalysatorqualitätsminderung aufgrund der Verschmutzung mit Schwefel, Bringen der Sauerstoffkonzentration im Abgas auf im wesentlichen Null und Erhöhen der Abgastemperatur.

2. Abgasreinigungssystem nach Anspruch 1, bei dem das Luftversorgungssystem (5) einen Teil der Luft, die von einem Kompressor eines Turboladers vorverdichtet ist, zu einer Position liefert zwischen dem NOx-Katalysator (3) vom direkten Reduktionstyp und dem DPF mit einem Katalysator (4).

3. Abgasreinigungssystem nach Anspruch 1 oder 2, bei dem der DPF mit einem Katalysator (4) mit dem Oxidationskatalysator gebildet wird, der auf Wandoberflächen des Wandflußtyps gehalten wird.

4. Abgasreinigungssystem nach Anspruch 1 oder 2, bei dem der DPF mit einem Katalysator (4) aus dem Oxidationskatalysator und dem PM-Oxidationskatalysator, der auf Wandoberflächen vom Wandflußtyp gehalten wird, gebildet wird.

5. Abgasreinigungssystem nach Anspruch 1 oder 2, bei dem der DPF, der einen Oxidationskatalysator hat, der an der aufstromigen Seite angeordnet ist, statt des DPF mit einem Katalysator (4) verwendet wird.

6. Verfahren für das Steuern eines Abgasreinigungssystems mit einem NOx-Katalysator vom direkten Reduktionstyp für das Reinigen von NOx in einem Abgas und einem DPF mit einem Katalysator (4) für das Reinigen von PM im Abgas, die in einer Abgasleitung in einer Ordnung von einer aufstromigen Seite zu einer abstromigen Seite angeordnet sind, welches das Zuführen (5) von Luft zwischen dem NOx-Katalysator (3) vom direkten Reduktionstyp und dem DPF mit Katalysator (4) während eines Betriebes für die Regenerierung des NOx-Katalysators (3) vom direkten Reduktionstyp von einer Katalysatorqualitätsverminderung aufgrund der Verschmutzung mit Schwefel, das Bringen der Sauerstoffkonzentration in dem Abgas auf im wesentlichen Null und das Erhöhen der Abgastemperatur aufweist.

## Revendications

1. Un système de purification de gaz d'échappement ayant un catalyseur de NOx de type à réduction directe destiné à purger des NOx dans un gaz d'échappement et un DPF avec un catalyseur destiné à purger les MP dans le gaz d'échappement arrangés dans un passage pour gaz d'échappement dans cet ordre dans le sens d'un côté amont à un côté aval, lequel comprend en outre un système d'alimentation en air destiné à fournir de l'air entre le catalyseur de NOx de type à réduction directe et le DPF avec un catalyseur au cours d'un fonctionnement pour restituer le catalyseur de NOx de type à réduction directe d'une détérioration de catalyseur due à un empoisonnement au soufre en amenant la concentration en oxygène dans le gaz d'échappement à être de substantiellement zéro et en élevant la température du gaz d'échappement.

2. Le système de purification de gaz d'échappement tel que revendiqué dans la revendication 1, dans lequel le système d'alimentation en air fournit une partie de l'air surcomprimé par un compresseur d'un turbocompresseur à une position entre le catalyseur de NOx de type à réduction directe et le DPF avec un catalyseur.

3. Le système de purification de gaz d'échappement tel que revendiqué dans la revendication 1 ou 2, dans lequel le DPF avec un catalyseur est formé avec le catalyseur d'oxydation porté sur des surfaces formant parois de type wall flow.

4. Le système de purification de gaz d'échappement tel que revendiqué dans la revendication 1 ou 2, dans lequel le DPF avec un catalyseur est formé avec le catalyseur d'oxydation et le catalyseur d'oxydation de MP portés sur des surfaces formant parois de type wall flow.

5. Le système de purification de gaz d'échappement tel que revendiqué dans la revendication 1 ou 2, dans lequel le DPF ayant un catalyseur d'oxydation disposé au niveau du côté amont est utilisé à la place du DPF avec un catalyseur.

6. Un procédé destiné à contrôler un système de purification de gaz d'échappement ayant un catalyseur de NOx de type à réduction directe destiné à purger des NOx dans un gaz d'échappement et un DPF avec un catalyseur destiné à purger les MP dans le gaz d'échappement arrangés dans un passage pour gaz d'échappement dans cet ordre dans le sens d'un côté amont à un côté aval, lequel comprend fournir de l'air entre le catalyseur de NOx de type à réduction directe et le DPF avec un catalyseur au cours d'un fonctionnement pour restituer le catalyseur de NOx de type à réduction directe d'une détérioration de catalyseur due à un empoisonnement au soufre en amenant la concentration en oxygène dans le gaz d'échappement à être de substantiellement zéro et en élevant la température du gaz d'échappement.
